Europäisches Patentamt

European Patent Office

Office européen des brevets

Publication number: **0 276 341**
**A1**

# EUROPEAN PATENT APPLICATION

Application number: **87101054.2**

Date of filing: **26.01.87**

Int. Cl.⁴ **B60S 1/34** , B60S 1/18

Date of publication of application:
**03.08.88 Bulletin 88/31**

Designated Contracting States:
**AT BE CH DE ES FR GB GR IT LI LU NL SE**

Applicant: **ELBEX (JAPAN) LTD.**
**Koizumi Building 4th Floor 1-1, Akasaka**
**4-chome**
**Minato-ku Tokyo(JP)**

Inventor: **Elberbaum, David**
**No. 302 Iikura Comfy Homes 4-4 Azabudai**
**3-chome**
**Minato-ku Tokyo(JP)**

Representative: **Prüfer, Lutz H., Dipl.-Phys.**
**Harthauser Strasse 25d**
**D-8000 München 90(DE)**

## Motion converting device.

The device comprises a transmission mechanism (24) having a plurality of rotors (26) supported on a supporting means (12) at intervals and an endless member (28) trained over the rotors (26) to be operated by the rotation of at least one of the rotors (26), a drive means (16) for rotating one of the rotors (26), a guiding means (44) disposed along the endless member (28), a movable means (54) supported movably by the guiding means (44), and a means (30) for connecting the movable means (54) into the endless member (28) and mounted on the endless member (28) to move together with the endless member (28), so that the movable means (54) is reciprocated by the movement of the connecting means (30) when the drive means (16) is operated.

F I G. I

# MOTION CONVERTING DEVICE

This invention relates to a motion converting device for converting rotational motion into reciprocating motion.

In a wiper for wiping off dust, insect, water content, mud, grease or the like attached to a front glass of a vehicle such as an automobile, a front glass disposed on the front surface of an industrial television camera or the like, a wiper arm is pivoted on a support at one end thereof. Thus, in a prior art wiper, a shape of the wiping range wiped off by a wiper blade is a sector. Therefore, when a window glass to be wiped is quadrilateral, the corners are not wiped so that the wiping range covers only a small area.

The linear reciprocation of the wiper blade will suffice for the removal of such defect. However, with prior art motion converting devices such as crank mechanism and link motion which convert rotational motion of a drive means rotating only in one direction into linear motion, the size of the device is increased when the stroke of reciprocation is large. Further, with a completed device incorporating the motion converting device (hereinafter referred to it as completed device), particularly the area occupied by the motion converting device with respect to the front area of said device is made large, thereby increasing the size of the complete device.

An object to the present invention is to provide a motion converting device which is compact even with the large stroke of reciprocation and occupies a small area relative to a completed device.

A motion converting device according to the present invention comprises: a transmission mechanism having a plurality of rotors supported on a supporting means at intervals and an endless member trained over said rotors to be operated by the rotation of said rotors; a drive means for rotating one of said rotors, a guiding means disposed along said endless member; a movable means supported movably by said guiding means; and a means for connecting said movable means into said endless member and mounted on said endless member to move together with the endless member, so that said movable means is reciprocated by the movement of said connecting means when said drive means is operated.

Further, a motion converting device according to the present invention comprises: a pair of transmission mechanisms, each having a plurality of rotors supported on a supporting means at intervals and an endless member trained over said rotors to be operated by the rotation of at least one of said rotors, said endless members of said transmission mechanisms being disposed parallel to each other at intervals; a drive means for rotating at least one of said rotors; a reciprocating means reciprocated when said drive means is operated; and two connecting means for connecting said movable means to endless members so that said movable means is reciprocated.

According to the present invention, the movable means is moved by the movement of the endless member, thereby rotational motion is converted into reciprocating motion. Therefore, a compact motion converting device is provided to occupy a small area in a completed device incorporating the corresponding motion converting device even if the stroke of reciprocation is large.

The other objects and features of the invention will become apparent from the following description of preferred embodiments of the invention with reference to the accompanying drawings, in which:

Fig. 1 is a front view showing an assembly incorporating a motion converting device according to the present invention;

Fig. 2 is a left side view showing the motion converting device;

Fig. 3 is a plan view showing the motion converting device;

Fig. 4 is a sectional view taken along the line 4-4 in Fig. 1;

Fig. 5 is a fragmentary enlarged view shown by the symbol 5 in Fig. 4;

Fig. 6 is a perspective view showing an embodiment of a connector;

Fig. 7 is an explanatory illustration of operation of the motion converting device; and

Fig. 8 is a front view showing another embodiment of the motion converting device.

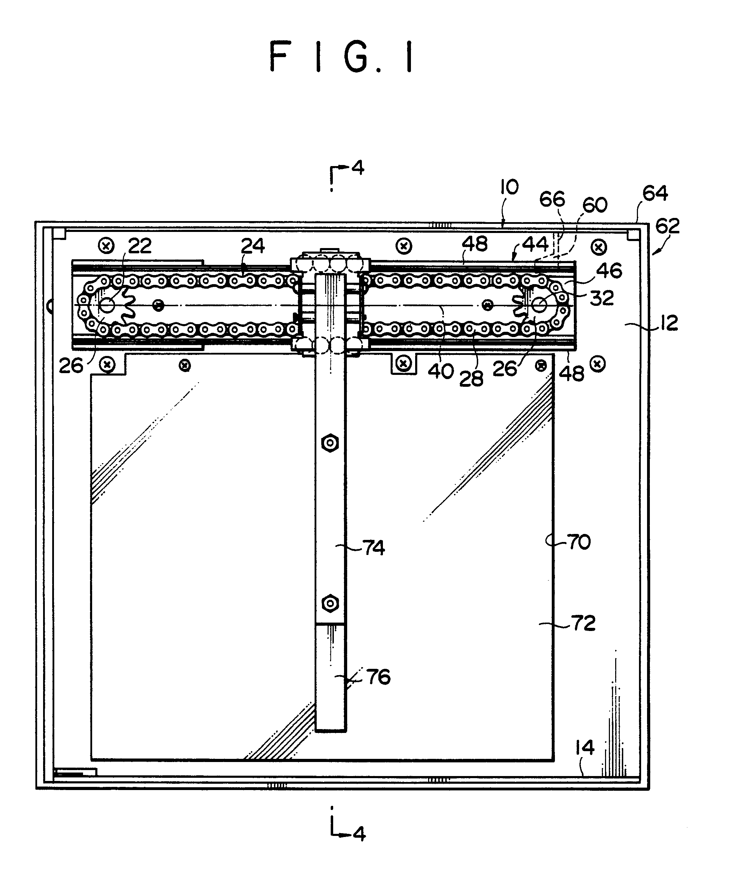

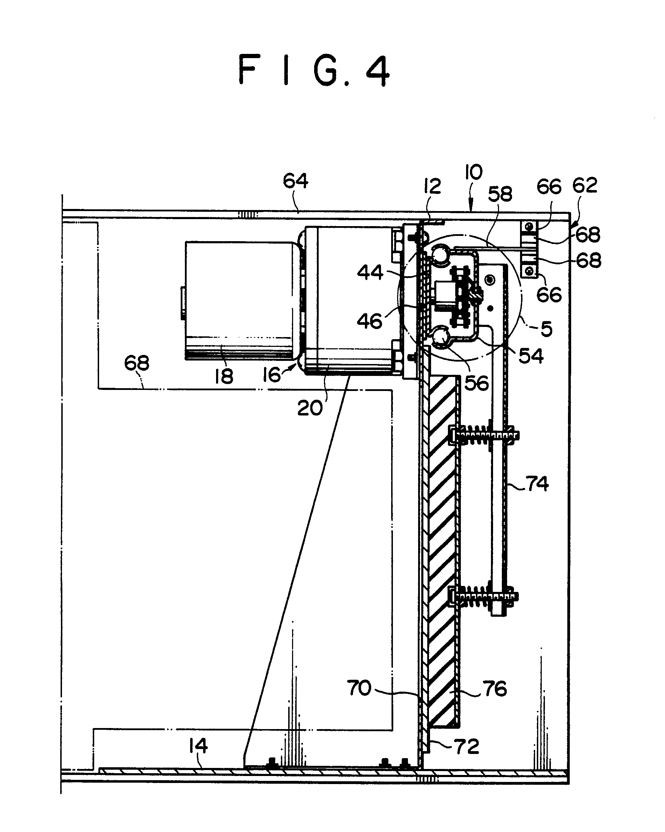

A motion converting device 10 shown in Figs. 1 to 4 comprises a support 12 which is made of a metal plate having the lower end fixed to a base plate 14 and extends vertically upward from the base plate 14. The support 12 also has the central portion and both side portions located left and right of the central portion, said side portions are bent backward to form a channel like shape together with the central portion.

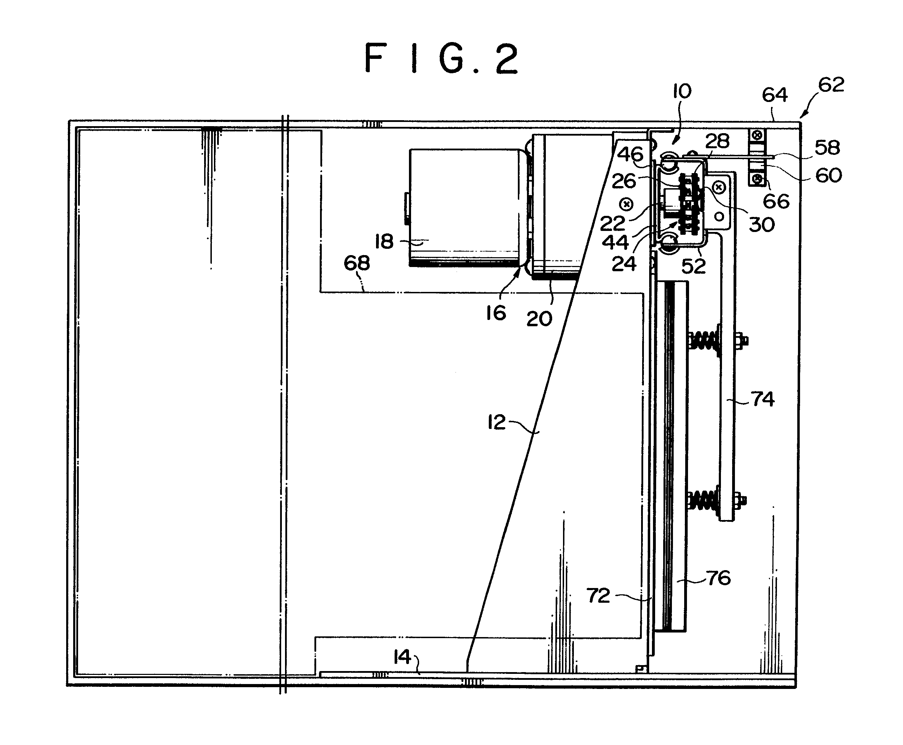

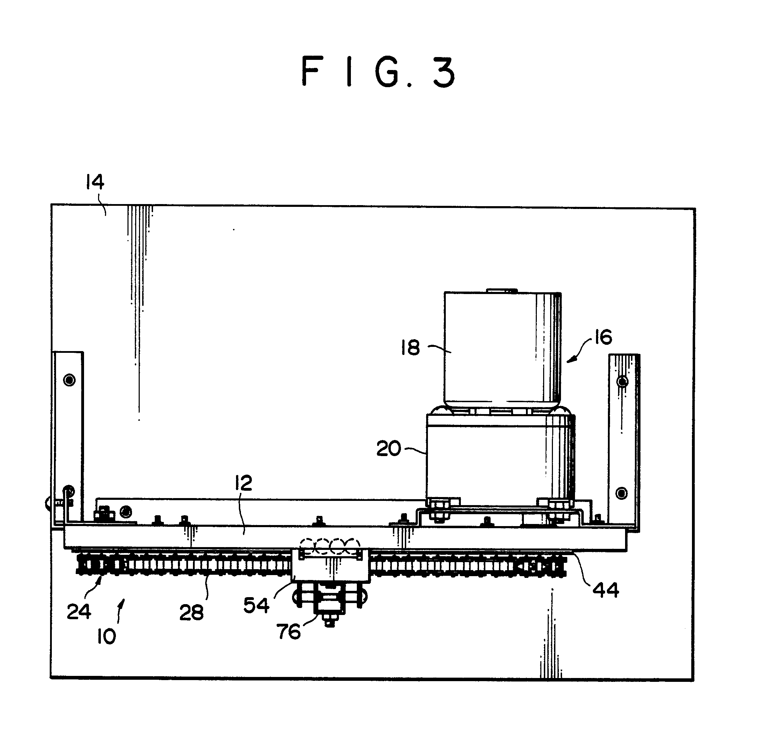

As shown in Figs. 2 and 3, a drive source 16 is mounted on the back of the support 12. The drive source 16 is provided with a motor 18 and a reduction gear 20 for reducing the rotational speed of the motor 18. An output shaft 22 of the reduction gear 20 extends rotatably through the support 12 and projects from the front face of the support 12.

A transmission mechanism 24 is disposed on the front face of the support 12. The transmission mechanism 24 is provided with a pair of rotors 26 disposed left and right of the upper portion of the support 12 at an interval, an endless member or an endless transmission member 28 or transmission body trained over the rotors 26 and a connector 30 mounted on the transmission body 28. In the embodiment shown in the drawing, the rotor 26 is a sprocket and the transmission body 28 is a chain meshing with said sprocket. However the rotor 26 may be a pulley and the transmission body 28 may be an endless belt or rope. Also, the rotor 26 may be a gear and the transmission body 28 may be a timing belt.

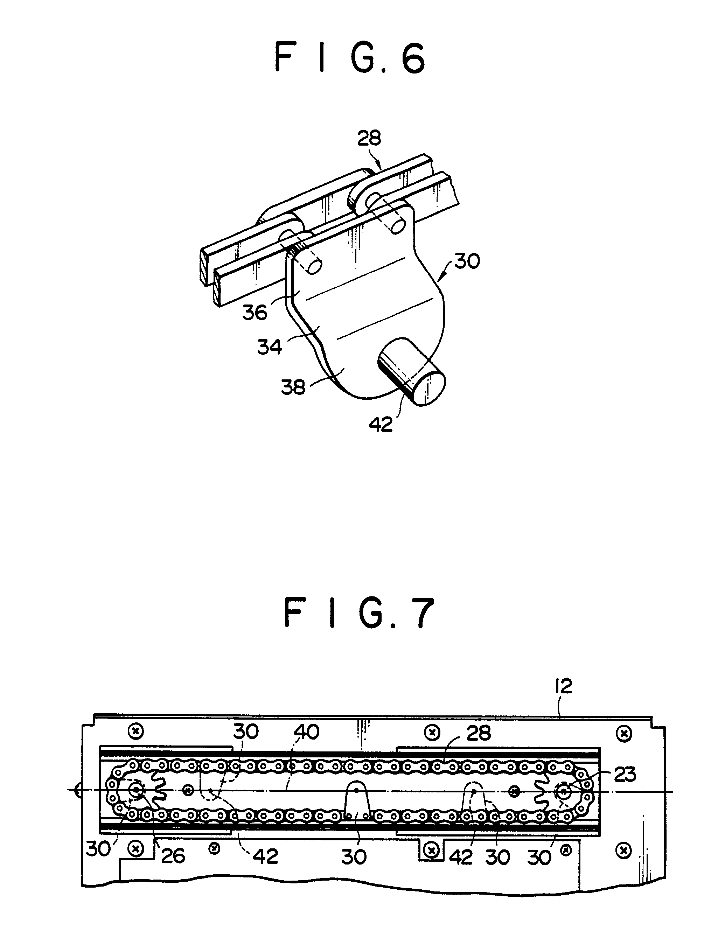

One rotor 26 is fixed to the output shaft 22 of the reduction gear 20 and the other rotor is fixed to a shaft 32 supported rotatably by the support 12. As shown in Fig. 6, the connector 30 has an inclined central portion 34 and ends 36,38 extending from both sides thereof in the opposite direction to each other. As shown in Fig. 7, the connector 30 extends from the transmission body 28 toward a line 40 interconnecting the center of rotation of the rotor 26 and has one end 36 mounted on the front face of the transmission body 28 by two chain pins such that one end 36 constitutes a chain element. The other end 38 of the connector 30 is located at the side of said line 40 of the transmission body 28 and has a connecting pin 42 extending rotatably through the portion of the line 40.

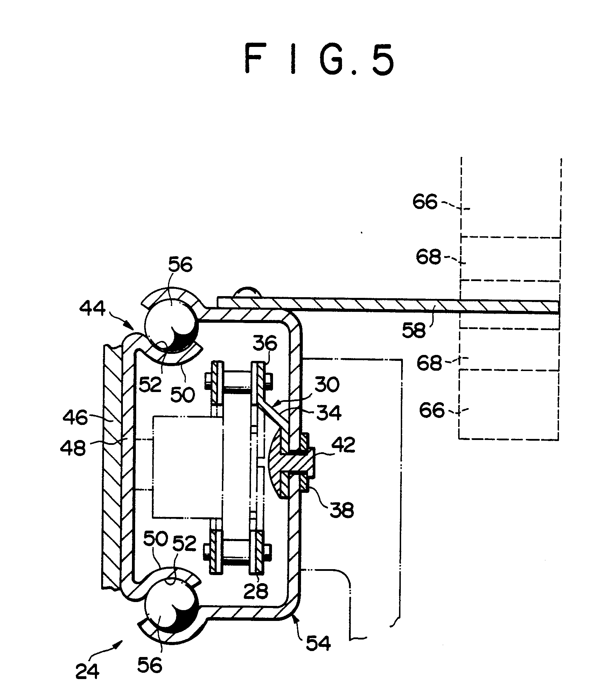

To the front face of the support 12 is fixed a guide 44 through a spacer 46 by screws. As shown in Fig. 5, the guide 44 has a generally channel like shape consisting of the central portion 48 and two side portions 50 bent in the same direction at both sides of the central portion 48 and is fixed on the central portion 48 to the support 12 by screws. One of the side portions 50 extends left and right above the transmission mechanism 24 and the other of the side portions extends left and right below the transmission mechanism 24. Both side portions 50 provide guide sections and have a guide groove 52 formed by arcuately bending the side portions 50. Said shafts 22,32 extend rotatably through the central portions 48 of the spacer 46 and guide 44.

The guide 44 supports a slider or movable body 54. As shown in Fig. 5, the movable member or movable body 54 has a form of channel like shape, is maintained movably left and right along the guide 44 by a plurality of balls 56 and pivotally connected to said connector 30 on the position of said line 40 by pins 42.

A strip-like operating lever 58 such as an actuator is mounted on the movable body 54. A longitudinal end of the operating lever 54 is fixed to the upper portion of the movable body 54 by screws and the other end projects in front of the movable body 54. The operating lever 58 is detected electrically by a sensor 60.

The sensor 60 is disposed in a case 64 of a completed device 62 incorporating the motion converting device 10. The sensor 60 consists of a pair of light-emitting element and light-receiving element mounted on a support arm 66 and is disposed such that light beams emitted from said light-emitting element to said light-receiving element are interrupted by the operating lever 58 inserted between both elements. A sensing signal of the sensor 60 is used for a signal to stop the movable body 54 at a predetermined position by stopping the drive source 16 in a control circuit not shown.

The completed device 62 in the embodiment shown in the drawing is an industrial television camera device in which a television camera 68 is disposed in the depth of the case 64 and the motion converting device 10 is disposed in front of the television camera 68. Thus, the support 12 is provided with a window 70 for the view field of said camera 68. The window 70 is closed by a transparent front glass 72 mounted on the support 12. The motion converting device 10 in the embodiment shown in the drawing is used for a wiper driving means for the glass 72. In this case, a wiper arm 74 is bolted to the movable body 54 and a wiper blade 76 is mounted on the wiper arm 74. Said sensor 60, as illustrated in Fig. 1, is provided in a position where it detects the operating lever 58 when the movable body 54 is located at the right end of the transmission mechanism 24.

In operation of the motion converting device 10, when the rotor 26 is rotated by the drive source 16, the transmission body 28 of the transmission mechanism 24 is moved around the rotors 26. Thus, the connectors 30, as shown in Fig. 7, is moved with the downward orientation when being moved above the line 40 interconnecting the centers of rotation of the rotors 26, is moved with the upward orientation when being moved below said line 40 and is moved while being gradually changed the positions from the downward to upward orientation or vice versa when turning around the rotors 26. That is, the connector 30 is moved while being maintained the orientations directed toward a space defined by the transmission body 28.

When the connector 30 is moved while being maintained said orientations, the connecting pin 42 located on the line 40 is reciprocated left and right on the line 40 in Fig. 1. At this time, the movable body 54 pivotally connected to the connector 30 by the connecting pin 42 is reciprocated in the same direction in synchronization with the pin 42. When the movable body 54 is reciprocated in such a manner, the wiper arm 76 is reciprocated and thus the wiper blade 74 also is reciprocated, thereby the front glass 72 is cleaned by the wiper blade 74.

Said motion converting device 10 will do only with the transmission mechanism 24 and guide 44 having the lengthwise dimension corresponding to the necessary stroke. Therefore, the motion converting device 10 does not become large-sized with a large stroke. As a result, the completed device 62 incorporating the motion converting device 10 occupies a small area. Also, since the movable body 54 is reciprocated by the transmission body 28, the front face of the support 12, i.e., the surface on which the transmission mechanism 24 is disposed may be used under the vertical or horizontal condition. Further it may be used either under the upward orientation or downward orientation when said mechanism is used horizontally.

In said motion converting device 10, since the pin 42 is always located on the line 40, the pin 42 is located in the center of rotation of the rotor 26 to stop the linear motion while the connector 30 is turned around the rotor 26, i.e., while being changed the position from the upward orientation to the downward orientation or vice versa. Thus, the movable body 54 also is stopped its movement during that time. In this case, however, the stopping time of the movable body 54 is a time taken for turning the connector 30 around the rotor 26 by 180° since the position in which the movable body 54 is connected to the connector 30 is always on the line 40. Therefore, said time is very short compared with the time taken for one time of reciprocation of the movable body 54. As a result, said stopping time can be neglected in the motion converting device having the large moving distance of the movable body 54.

Further, when the motion converting device 10 according to the present invention is applied to the completed device which will do with said long stopping time or needs said long stopping time, for example a wiper, the connector 30 does not need to be pivotally connected to the movable body 54 on the line 40. In this case, for example, a slot in the movable body 54 or connector 30 engaging the pin 42 or a hole having the diameter larger than that of the pin 42 may be provided.

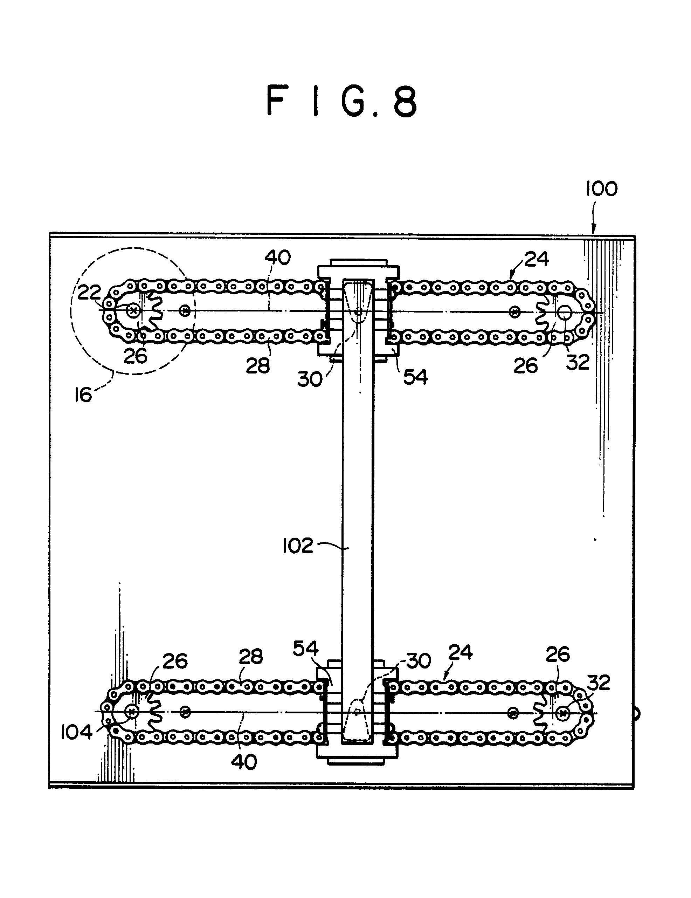

A motion converting device 100 shown in Fig. 8 is provided with two sets of transmission mechanisms 24, two movable bodies 54 provided respectively on the transmission mechanisms 24 and a beam member 102 spanning both movable bodies 54 and supported by the movable bodies 54, instead of the guide. Each transmission mechanism 24, similarly to the mechanism 24 shown in Figs. 1 to 4, comprises a pair of rotors 26, transmission body 28 trained over the rotors 26 and connector 30 mounted on the transmission body 28. One rotor 26 of one transmission mechanism 24 is mounted on the output shaft 22 of the drive source 16. One rotor 26 of the other transmission mechanisms is mounted on a shaft 104 supported rotatably on the support 12 and connected to said output shaft 22 by a connecting means like a chain. The remaining rotors are mounted on the shaft 32 supported rotatably by the support 12. Each connector 30 is pivotally connected to the movable body 54 by the connecting pin 42 on the line 40 interconnecting the centers of rotation of the rotors 26 and moved in synchronization with the movement of the transmission mechanism 24.

In the motion converting device 100, the rotors 26 of both transmission mechanisms 24 are rotated by the drive source 16. When both transmission bodies 28 are driven, both connectors 30 are reciprocated in synchronization with each other. By so doing, both connecting pins 42 are reciprocated on the line 40, thereby both movable bodies 28 are reciprocated in synchronization with each other. As a result, the beam member 102 is reciprocated. Accordingly, when the motion converting device 100 is used in a drive device for the wiper of the industrial television camera, the wiper blade may be mounted on the beam member 102, or the beam member itself may be used for the wiper blade.

## Claims

1. A motion converting device comprising:
a transmission mechanism (24) having two rotors (26) supported on a supporting means at intervals and an endless member (28) trained over said rotors to be operated by the rotation of at least one of said rotors;
a drive means (16) for rotating one of said rotors;
a guiding means disposed along said endless member;
a movable means (54) supported movably by said guiding means; and
a means (30) for connecting said movable means (54) with said endless member (28) and mounted on said endless member (28) to move together with the endless member (28), so that said movable means (54) is reciprocated by the movement of said connecting means (30) when said drive means (16) is operated.

2. A motion converting device as claimed in claim 1, wherein said connecting means (30) and said reciprocating means are engaged with each other on a line (40) interconnecting the centers of rotation of said rotors (26) located on both ends.

3. A motion converting device as claimed in claim 1, wherein said rotors (26) have the same radius of rotation, and said connecting means (30) and movable means (54) are engaged with each other at a position in which said connecting means (30) coincides with the center of rotation of said rotor (26) when the connecting means (30) is moved around said rotor (26).

4. A motion converting device as claimed in one of claims 1 - 3, wherein said connecting means (30, 42) and movable means (54) are pivotally connected to each other.

5. A motion converting device as claimed in one of claims 1 - 4, wherein said rotor (26) is a sprocket, pulley or gear, said endless member (28) is a chain belt, rope or timing belt and said connecting means (30) is mounted on the widthwise side of said endless member (28).

6. A motion converting device comprising: a pair of transmission mechanisms (24), each having at least two rotors (24) supported on a supporting means (12) at intervals and an endless member (28) trained over said rotors (26) to be operated by the rotation of at least one of said rotors, said endless members (28) of said transmission mechanisms (24) being disposed parallel to each other at intervals; a drive means (16) for rotating at least one of said rotors; a reciprocating means reciprocated when said drive means is operated, and two connecting means (30) for connecting said movable means (54) to endless members (28) so that said movable means (54) is reciprocated.

7. A motion converting device as claimed in claim 6, wherein said reciprocating means is provided with two movable members (54) provided respectively on said transmission mechanisms (24) to reciprocate in synchronization with each other and a beam member (102) spanning both movable members (54).

# F I G. I

# F I G . 2

0 276 341

0 276 341

# FIG. 3

# F I G. 4

# F I G. 5

# F I G. 6

28
30
36
34
38
42

# F I G. 7

12
30  40  28
23
30
26  42  30  42  30  30

# F I G . 8

## DOCUMENTS CONSIDERED TO BE RELEVANT

| Category | Citation of document with indication, where appropriate, of relevant passages | Relevant to claim | CLASSIFICATION OF THE APPLICATION (Int. Cl 4) |
|---|---|---|---|
| X | FR-A-1 121 126 (BERA) <br><br> * Page 1, column 1, lines 10-17; column 2, lines 8-38; claims 1,2; figures 1-4 * | 1,4,6, 7 | B 60 S 1/34 <br> B 60 S 1/18 |
| | --- | | |
| X | US-A-1 748 055 (BROWN et al.) <br><br> * Page 1, lines 1-8,68-92; claims 1,2; figures 1,4-6 * | 1,2,4, 5 | |
| | --- | | |
| X | FR-A- 670 219 (CHAVANON et al.) <br> * Page 1, lines 1-12,33-45; page 2, lines 4-24,66-85; figures 1-4 * | 1,6,7 | |
| | ----- | | **TECHNICAL FIELDS SEARCHED (Int. Cl 4)** <br><br> B 60 S |

The present search report has been drawn up for all claims

| Place of search | Date of completion of the search | Examiner |
|---|---|---|
| THE HAGUE | 23-09-1987 | GEYER J.L. |